# EUROPEAN PATENT APPLICATION

(11) **EP 4 047 398 A1**
(43) Date of publication of application: **24.08.2022**
(21) Application number: 21158507.0
(22) Date of filing: 22.02.2021
(51) Int. Cl.: G01T 3/00, G01T 1/20

(54) **METHOD AND APPARATUS FOR DETECTING LARGE PULSED FLUXES OF NEUTRONS USING OPTICAL RESPONSE OF CRYSTALS**

(71) Applicant: Vilnius University, 01513 Vilnius (LT); Korzhik, Mikhail, 220020 Minsk (BY)
(72) Inventor: Korzhik, Mikhail, 220020 Minsk (BY); Tamulaitis, Gintautas, 08451 Vilnius (LT); Nargelas, Saulius, 11317 Vilnius (LT); Nomeika, Kazimieras, 04345 Vilnius (LT); Podlipskas, Zydrunas, 03229 Vilnius (LT); Tamosiunas, Vincas, 06218 Vilnius (LT)
(74) Representative: Klimaitiene, Otilija

(57) **Abstract**

Method and apparatus to monitor large neutron fluxes, which are too large to be monitored by the neutron detectors in the prior art due to deterioration of electronic components of the detectors are disclosed. The method is based on the detection of non-equilibrium carriers generated by neutrons via secondary particles in a detecting crystal. Transient absorption of a probing light beam is used to detect the signal, which is proportional to the density of the non-equilibrium carriers and, consequently, to the flux of neutrons passing the detecting crystal. The method enables splitting the neutron detector into an all-optical detecting unit and a signal processing unit without corrupting the detection sensitivity. The two units are linked by a lightguide, so that the signal processing unit is placed sufficiently far from the radiation source to avoid any radiation damage for electronics. The source of the light used for probing the detecting crystal is also placed remotely from the detection unit and is linked with it via a lightguide. A few types of single crystals to be exploited as the detecting crystal are suggested and three embodiments of the detection unit to improve its sensitivity are discussed.

## Description

### TECHNICAL FIELD

The present invention relates to neutron detectors. In specific, it relates to a novel neutron detector and method for detecting large neutron fluxes where a detecting unit and a signal readout unit are separated in space to avoid deteriorating influence of irradiation on the readout electronics and with a novel detecting unit based on non-equilibrium carrier absorption to increase the sensitivity and decrease the size of the detector.

### BACKGROUND ART

Detection of ionizing radiation is on demand in many fields of research, medicine, security and nuclear industry. Ionizing radiation is the radiation, corpuscular and electromagnetic, the interaction of which with materials results in generation of non-equilibrium carriers in the material. The radiation occurs during radioactive decay, nuclear transformations, by acceleration of charged particles or stopping of charged particles in materials. By its nature, the ionizing radiation can be electromagnetic (ultraviolet light, x-rays, and gamma radiation) or represent a flux of particles of various kinds: neutrons, protons, electrons, and ionized nuclei.

Neutrons are particles with zero electric charge, so their interaction with matter is comparatively weak and imposes specific difficulties in detecting. The interaction of neutrons with matter depends on their energy. According to their energies, neutrons are conventionally divided into thermal (with energies of approximately 25 meV), epithermal (approximately 1 eV), slow (0.03 to 100 eV), intermediate (0.1 to 500 keV), and fast (500 keV or more) neutrons. In general, neutrons can be produced in several ways. Isotopic sources and nuclear reactors can produce neutron fluxes in a wide range from a few neutrons/(s·cm²) to 10⁶ neutrons/(s·cm²) or even higher in the vicinity of the source or reactor. Neutrons might also be emitted as a result of interaction of charged particles (electrons, protons, ionized nuclei) with different targets **[1]**. Vacuum-sealed pulsed neutron tubes assembled in a portable unit provide a limited intensity of up to 10⁶ neutrons per pulse. Accelerator-based neutron sources **[2]**, particularly those based on the acceleration of positively charged particles, produce more than 10¹⁴ fast neutrons per second within a spatial angle of 4π. Electron accelerators, both circular, such as betatrons and synchrotrons, and linear, are utilized to produce large numbers of neutrons from a target due to the (gamma,n) reaction occurring in the target. Neutrons are effectively produced in the targets of heavy metals (U, W, Pb) when the electron energy exceeds the photoneutron production threshold (∼ 6 MeV for most of the nuclei). At the particle beam energy exceeding 50 MeV, the yield of high-energy neutrons at the level of 10¹³ neutrons per kW of the applied beam can be reached. High-power pulsed charged particle accelerators are used to produce pulses of neutrons **[3]**. A series of such accelerators, referred to as a neutron spallation source, generates short pulses of up to 10¹⁴ neutrons with a pulse duration of 500-1000 ns at a frequency in the Hz range. The neutron spallation sources with a power of 5 MW, a pulse duration in a millisecond domain and a repetition rate of 14-20 Hz are already in operation or under construction and require neutron detectors at neutron fluxes substantially exceeding those exploited for detection in the prior art **[4]**.

The detection of low-energy neutrons is usually based on their absorption by nuclei of helium-3, lithium-6, boron-10, natural mixture of gadolinium, and several other isotopes. The absorption results in the creation of high-energy ionized particles, which are being further detected. Neutrons might be also detected due to reactions resulting in the emission of reaction products releasing gamma quanta or conversion electrons in their subsequent absorption. High-energy neutrons are usually detected by detecting ions occurring as a result of the energy transferred to nuclei due to elastic scattering of the neutrons.

Neutron detectors are being exploited in research (materials science, plasma and particle physics experiments, cosmic ray detection), instrumentation of nuclear reactors, detection of specific nuclear materials. Several types of neutron detectors are currently in use.

Gas proportional detectors exploit the interaction of neutrons with high neutron cross-section nuclides and subsequent gas ionization and enable measuring the number of neutrons. He-3 gas-filled (disclosed in US10,422,896), BF3 gas-filled (disclosed in US9,678,229 B2), and boron lined detectors are most common types of detectors in view of the active medium of the detectors. The neutron detecting efficiency of the gas detectors can be improved by coating the inner part of the gas-filled tube with neutron reactive material (as disclosed in WO2011025853A1). The gas detectors have an inherent drawback: the concentration of the neutron capturing nuclei in gasses, even under high pressure, is by an order of magnitude lower than that in solid-state media containing neutron capturing nuclei.

In scintillation neutron detectors, neutrons are absorbed by isotopes with a large neutron capture cross-section like ⁶Li in a solid medium. Afterwards, the excitation is transferred to activator ions serving as the centers of radiative recombination delivering photons to be detected by conventional photodetectors (disclosed in US9,274,237 B2). Plastic scintillators or light organic crystals are often exploited in the detection of recoil nuclei, particularly of hydrogen nuclei, which are at high concentration in organic neutron detecting media (disclosed in US20130299702A1). A general drawback of the recoil detection with organic materials is a low stopping power of the light organic materials to the secondary particles. Moreover, the escape of recoil protons from the detecting material results in nonlinearity of the detector response. Inorganic scintillation materials are better suited for efficient detection of secondary particles generated by neutrons **[5]**. Their density can be as large as 8.28 g/cm³ of PbWO₄, and the efficiency of neutron detection is substantially increased in detecting materials containing atoms with a large cross-section of neutron absorption: 6-Li, 10-B or a natural mixture of Gd. Specific scintillator materials have been suggested to ensure discrimination between neutron radiation and background gamma radiation (disclosed in patent application EP2573590A1). A detection unit based on two different scintillators predominantly reacting to different kinds of ionizing radiation (US20140224992A1) might be exploited to separate the signal generated by neutrons from background radiation.

In scintillation neutron detectors, light is emitted from the excited track in all directions, thus collection of the scintillation light is an issue. The collection is usually improved by covering the scintillation crystal by reflecting coating, e.g., by wrapping in Teflon tape, and by attaching the photodetector directly on the crystal with a layer of optical glue to improve the optical coupling. In patent EP2290406B1, the neutron detector comprises a gamma ray scintillator and a light detector optically coupled to the gamma ray scintillator. In US patent US6011266, the gamma ray scintillator is surrounded by a neutron sensitive material, preferably comprising boron. However, high-intensity neutron fluxes result in unrecoverable damage of the photodetector and subsequent readout electronics, which is a problem in application of patents EP2290406B1 and US6011266 for detection of large neutron fluxes. The damage might be avoided by separating the scintillation crystal and the light detection system is space with a lightguide between them to deliver the scintillation light to the photodetector, as suggested in patent EP2631676B1. The spatial separation between scintillator and photodetector with subsequent readout electronics is also exploited in patent US7525101B2. However, light collection into a small aperture of the lightguide is challenging and causes a drastic decrease in the fraction of photons generated due to scintillation, which reach the photodetector and contribute to the signal detected. The problem is partially mitigated by using a tapered portion of the lightguide linking the regular part of the lightguide with the scintillator (US20100224783A1). In EP2256177B1, the performance of scintillator-based neutron detectors is suggested to be improved by exploiting novel scintillating materials: metal fluoride crystals containing ⁶Li and having an effective atomic number in specific ranges. However, the readout problems discussed above remain unsolved.

Semiconductor neutron detectors are semiconductor devices, usually planar diodes. Sensitivity to neutrons is accomplished in these detectors basically in two ways: by coating the device with a neutron reactive material (disclosed in US7,855,372 B2) or by using a semiconductor material containing neutron reactive elements in its composition. In any neutron detectors of these or other types, the neutron detection is based on detecting the products of neutron interaction with nuclei of the material, preferably with those with higher interaction cross-sections. Integration of optical and electronic parts is an inherent property of a semiconductor neutron detector. This feature becomes a fundamental drawback when the detector is intended for detection in harsh irradiation conditions.

Non-equilibrium carrier absorption is a well-studied phenomenon in semiconductors (usually referred to as free carrier absorption) and recently in inorganic scintillating materials **[6, 7].** The absorption occurs due to optical transitions of electrons and/or holes to the states higher in energy. These states might be either continuous as in the conduction band or discrete as in activator ions. The non-equilibrium carriers might exist as free electrons and holes, trapped carriers or carriers captured to radiative or nonradiative recombination centers. All those might participate in the absorption in optical region with contribution depending on the absorption cross section, the density of final states, and the concentration of the absorbing particles. The latter property is usually exploited in utilizing the non-equilibrium carrier absorption for monitoring the density of non-equilibrium carriers. The measurements are usually performed in pump and probe configuration: the material is excited by a pump pulse and is probed by a probe pulse. The measurements are usually carried out in an embodiment providing capability of changing the delay between pump and probe pulses. Exploitation of the probe pulse with a spectrum, which is close to a white light supercontinuum, enables collecting information on spectral distribution of the induced optical absorption, which is useful for identification of the species responsible for the induced absorption. In the current invention disclosed, the non-equilibrium carrier absorption is suggested to be exploited for detection of non-equilibrium carriers generated by secondary particles after interaction of neutrons with the detecting medium. Optical losses in an optical fiber doped with metal particles of Al, Co, and Fe is suggested to be exploited in measuring radiation dose (KR101669271B1). In patent KR101382870B1, rare earth-added optical fiber is used to collect the radiation dose, whereas an external pumping of the fiber is provided and the decrease of the amplified spontaneous emission light due to the accumulated dose is measured. Both these methods are not suitable for measuring neutron flux because of a small sensitivity of the optical loss in these fibers to neutron irradiation and low radiation hardness of these fibers.

### SUMMARY OF THE INVENTION

Method and apparatus to detect neutrons up to the values of their flux too high to be detected with neutron detectors in the prior art are disclosed. The method is based on a combination of two approaches: remote signal readout and detection of non-equilibrium carriers generated by secondary particles due to interaction of neutrons to be detected with detecting medium. In the method suggested, the quantity reflecting the neutron flux is the change in optical absorption at certain spectral position, which is probed in certain detecting crystal subjected to the neutron flux. A probe light beam generated remotely by a laser diode or other light source with high stability output is delivered to the detecting crystal via a lightguide. The detection system is split into two modules: a highly radiation tolerant detection module and a module to convert the pulse in light intensity to an electrical signal to be further processed. The detecting and converting modules are connected via a lightguide, which enables placing the conversion module at a distance long enough from the radiation source to avoid any deterioration of the readout electronics by the radiation. As a result, extremely large neutron fluxes might be monitored without corruption of the detection system. On the other hand, the exploitation of non-equilibrium carrier absorption in the detecting crystal enables scanning the optical absorption within a large volume in the detecting crystal by exploiting multiple passing of the probing light beam or enhancing the sensitivity of the detection by applying interferometric techniques like Mach-Zehnder or Michelson interferometers, which are in use in detection of small changes in the refraction index. Moreover, scanning of a large volume of the detecting crystal facilitates separation of the response of a neutron detector to the secondary particles due to the interaction of neutrons with the detecting material, which is the signal sought for in the detector, from the unwanted background response due to the excitation of the detecting material by gamma quanta, which are usually emitted by neutron sources synchronously with the neutrons. Due to relatively long attenuation length for neutron flux, the non-equilibrium carriers generated as a result of interaction with neutrons are distributed within the entire crystal thickness and are predominantly probed in the non-equilibrium carrier absorption exploited in the method suggested, whereas the background gamma radiation generates the non-equilibrium carriers close to the front surface of the detecting crystal, so that these carriers have a weak influence on the optical signal read out from the detecting crystal. Last but not least, the detection method and apparatus design enable substantial minimization of the detecting module consisting just of a detecting crystal coupled with input and output lightguides. This feature enables placing the detecting module in close proximity of the neutron source or using arrays of the modules when information on spatial distribution of the neutron flux is on demand.

The novelty of the invention is in ability of the neutron detector to monitor neutron fluxes substantially larger than those feasible to be monitored by the neutron detectors in the prior art.

The apparatus is applicable for monitoring large pulsed neutron fluxes in large experimental facilities, where neutrons are produced by spallation reaction, as well as in the infrastructures of nuclear reactors, where neutrons are generated in fission reactions.

### DESCRIPTION OF DRAWINGS

To understand the specific characteristics of the invention and appreciate its practical applications, the following pictures and graphs are provided and referenced hereafter. Figures are given as examples and should not limit the scope of the invention.
- **Fig. 1**: depicts the scheme of the apparatus for neutron detection.
- **Fig. 2**: illustrates the probe beam path in the detecting crystal in three configurations ensuring an enhanced sensitivity of the probe beam to the non-equilibrium carriers generated in the crystal due to neutron irradiation: multipass transitions in the crystal with parallel opposite sides (a), multipass transitions in the crystal with inclined opposite sides (b), and transitions in an interferometric arrangement (c).
- **Fig. 3**: illustrates the kinetics of the differential optical absorption due to different density of non-equilibrium carriers generated in PWO single crystal by short-pulse photoexcitation at different pulse energy density: 0.07 (301), 0.28 (302), and 1.7 mJ/cm² (303).
- **Fig. 4**: illustrates the dependence of transient optical absorption in PWO single crystals on the photoexcitation power density measured at 0.3 ps delay after a 250 fs-long band to band excitation pulse.
- **Fig. 5**: illustrates the energy distribution of secondary gamma-quanta in PWO crystals of different thickness, 10 cm (a), 5 cm (b), and 1 cm (c), after irradiation by 10⁶ neutrons of 10 MeV energy; calculated using the GEANT4 simulation code.
- **Fig. 6**: illustrates the density of energy deposited by secondary gamma-quanta in PWO single crystals after their interaction with neutrons as a function of crystal thickness; calculated using GEANT4 simulation code.
- **Fig. 7**: illustrates the transmittance of 10 MeV neutrons through PWO crystals of different thickness, calculated using GEANT4 simulation code.
- **Fig. 8**: illustrates the intensity of transient absorption (TA) in Gd₃Al₂Ga₃O₁₂:Ce single crystal due to non-equilibrium carriers as a function of probe photon energy and delay between pump and probe pulses. The cross-sections of the data carpet showing TA kinetics at two typical probe photon energies of 1.6 and 2.2 eV are presented in the side panel, whereas the TA spectra at the delays between pump and probe pulses of 0.5 and 100 ps are presented in the lower panel.
- **Fig. 9**: illustrates the signal from photodetector (108 in Fig. 1) as a response to the excitation pulse without (1) and with (2) probing light acting on the detecting crystal (104 in Fig. 1).

### DRAWINGS - Reference Numerals

- **101** -: Light source;
- **102** -: Optical lightguide;
- **103 -**: Collimator;
- **104** -: Crystal;
- **105** -: Sample holder and positioning system;
- **106 -**: Collimator;
- **107** -: Optical lightguide;
- **108** -: Photodetector;
- **109** -: Data readout system;
- **110** -: Particle flux;
- **201** -: Detecting crystal;
- **202** -: Mirror coating;
- **203** -: Input aperture with anti-reflecting coating;
- **204** -: Output aperture with anti-reflecting coating;
- **205** -: Input probe beam;
- **206** -: Output probe beam;
- **207** -: Detecting crystal;
- **208** -: Wedge angle;
- **209** -: Mirror coating;
- **210** -: Input/output aperture with anti-reflecting coating;
- **211** -: Input probe beam;
- **212** -: Output probe beam;
- **213** -: Shielded reference crystal;
- **214** -: Unshielded detecting crystal;
- **215** -: Beam-splitting optics;
- **216** -: Beam-coupling optics;
- **217** -: Input probe beam;
- **218** -: Output interference pattern;
- **301** -: at excitation pulse energy density of 0.04 mJ/cm²;
- **302** -: at excitation pulse energy density of 0.28 mJ/cm²;
- **301** -: at excitation pulse energy density of 1.7 mJ/cm²;
- **901** -: Photodetector response without probing light;
- **902** -: Photodetector response with probing light.

### DETAILED DESCRIPTION OF THE INVENTION

A detailed description of one embodiment of the disclosed method and apparatus is presented herein by way of exemplification and not limitation with references to the Figures. Disclosed are a method and an apparatus for neutron detection up to their flux values, which are too high to be permanently monitored with neutron detectors in the prior art. The method is based on the detection of non-equilibrium carriers generated by secondary particles due to interaction of the neutrons to be detected using a detecting crystal. The density of the non-equilibrium carriers is monitored in accordance to the transient optical absorption imposed by the carriers to the probing light beam. The apparatus design enables splitting in space the all-optical detecting unit and the signal detection and conversion unit to avoid any damaging influence of the irradiation on the readout electronics.

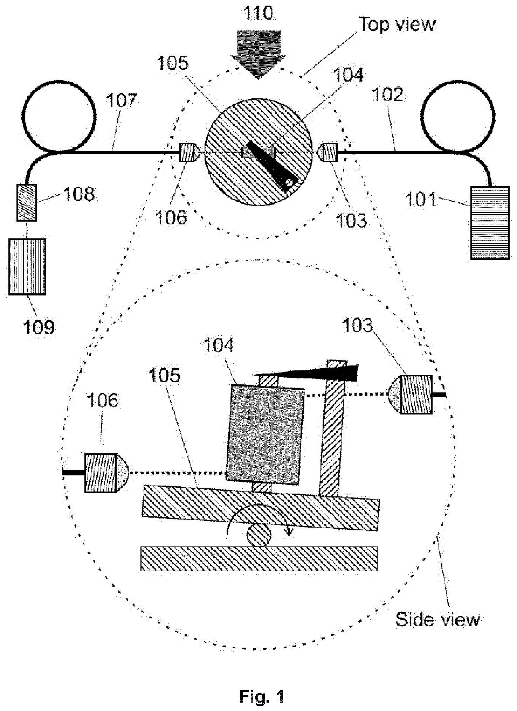

**Apparatus and its embodiments.** Figure 1 illustrates the key parts of the apparatus. A CW light source (101) is used for generation of the probing light beam. Laser diode is an unlimiting option as the light source. The light from the light source is delivered to the detection unit (encircled by dotted line in Fig. 1) via a lightguide (102). In the detection unit, the lightguide is coupled with a condenser lens (103) to direct the collimated light beam to the detecting crystal (104). After passing the detecting crystal, the collimated light beam is collected by a lens (106) to the output lightguide (107) and delivered to the detecting unit. The detecting unit contains a photodetector (108), where the optical signal is converted to electric current or voltage. The electrical signal is processed and analysed by a data readout system (109). The lightguide is long enough to ensure placing of the readout electronics in a safe distance from the irradiation source to avoid any damage of the electronics by the irradiation, which is an important issue in detecting large neutron fluxes.

Neutron flux (110) passing through the detecting crystal (104) generates secondary particles, the relaxation of which results in creation of a large number of non-equilibrium electron-hole pairs. These non-equilibrium carriers cause absorption of a part of the probing light passing the detecting crystal. The decrease in light intensity imposed by the non-equilibrium carriers is detected by the photodetector (108).

The data readout system (109) has the property of memory and is triggered using any conventional triggering technique to generate start or stop pulse for the system. The system also contains a processor configured to estimate the neutron flux (110) property using the measured signal.

The detecting crystal is fixed on a movable stage (105) enabling appropriate positioning of the crystal and fine tuning of the angle of incidence of the probing beam on the crystal surface to properly adjust the path of the probing beam in the crystal. The fine tuning is accomplished by actuators. The probed volume of the crystal affected by neutrons and containing non-equilibrium carriers generated in proportion to the number of neutrons to be detected might be increased by multiple pass of the probing light beam through the crystal.

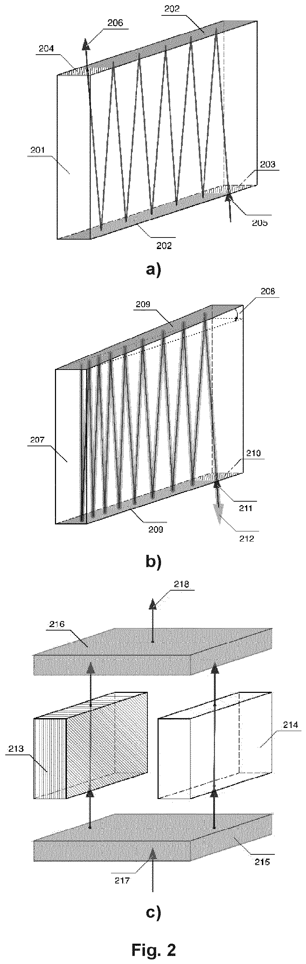

In one embodiment of the detecting unit, the path is increased by covering opposite parallel sides of the crystal by reflective coating and directing the incoming light beam in the direction ensuring a zigzag transition of the beam through the crystal. The corresponding configuration is depicted in Fig. 2a. The input probe beam (205) enters the detecting crystal (201) through an input aperture with antireflecting coating (203). The incidence angle is selected to ensure multiple reflections of the beam from two opposite sides of the crystal, which are coated by highly reflecting coating, until it leaves the crystal as an output beam (206) through the output aperture (204). The number of reflections, which increases the crystal volume probed by the probing beam and is a desirable property of the detection unit, is limited by the cross-section area of the collimated beam and light scattering during the reflections, which occurs due to surface imperfections.

In another embodiment of the detection unit, the number of reflections and consequently the interaction volume are further increased by exploiting crystal with inclined opposite sides (see Fig. 2b). The input beam (211) enters the crystal through an input/output aperture with an antireflective coating (210). The wedge angle (208) is calculated to ensure the path of the probe beam depicted in Fig. 2b. The beam is reflected from the reflecting opposite sides (209) of the crystal a multitude of times. Because of the inclination of the upper side of the crystal in respect to its lower side, the incidence and reflection angles decrease in each subsequent reflection, so that the beam starts moving back at the end of the crystal and finally leaves the crystal as output beam (212).

In another embodiment (see Fig. 2c), the sensitivity of the detecting unit is enhanced by applying the detection configuration based on the interferometric principle. The input probe beam (217) is initially split into two beams. Splitting can be accomplished by an optical beam splitter, a holographic beam splitter or another appropriate device (215). One of the beams passes the detecting crystal (214) subjected to the neutron flux to be monitored, whereas the second beam passes the second crystal (213), which is nominally identical to the first one except that it is shielded from any radiation. Optical system (216) is used to couple the two beams. Interference of the two beams results in the formation of an interference pattern (218). The spatial shift of the pattern due to the changed optical path length of the beam passing the detecting crystal as a result of the change in refraction index due to non-equilibrium carriers generated under the influence of neutrons to be detected is exploited to monitor the density of the non-equilibrium carriers and, consequently, the neutron flux. The shift of the interference pattern might be detected in many different ways, one of them is using an aperture to pass the light to the photodetector only from the selected spot on the interference pattern. In a variety of embodiments, the coupling and light detection can be accomplished in a way enabling the design of the detection unit using only optical components and linking the unit with the conversion unit containing a photodetector and other electronic components via lightguide to enable remote operation of electronic components without subjecting them to irradiation.

**Crystal types and properties.** The key properties of the crystal to be selected for the detecting unit are high efficiencies in stopping neutrons and in the conversion of secondary particles into non-equilibrium carriers, strong non-equilibrium carrier absorption, and high radiation tolerance of the material. The latter requirement strongly limits applicability of organic materials for this purpose. Nonhygroscopicity and mechanical hardness are also important, whereas a high crystal quality is of especial importance to ensure low optical losses and losses of non-equilibrium carriers due to fast nonradiative recombination. From this point of view, single crystals are preferable in comparison to noncrystalline materials, whereas the single crystals with matured fabrication technology, which has been developed on demand for specific large-scale applications, are of especial interest.

Transient absorption can be observed in a variety of inorganic compounds, where the conditions for accumulation of the non-equilibrium carriers can be arranged. It is appreciated that the localized electronic states located below the bottom of the conduction band can be utilized to enhance the accumulation. A set of distinct electronic states can be created either by structural complexes forming the crystalline compound or defect-related centers. Different anionic complexes on a base of metals like, Mg, Zn, Ca, Ba, Sr, Mo, and W are suitable for this purpose. The iron group metal ions possess an outer 3d shell. The population of the shell depends on the element atomic number and varies from 3d¹ to 3d⁹. The 3d levels are split in crystalline field due to the Stark effect. The lowest excited Stark components for all configurations from 3d¹ to 3d⁹ are located in the band gap and can be utilised for the accumulation of non-equilibrium carriers. A nonlimiting example is a Ti³⁺ ion having the 3d¹ electronic configuration, which can occupy octahedral sites in the plurality of compounds. Another nonlimiting example is a Fe³⁺ ion having the 3d⁵ electronic configuration, which can occupy octahedrally and tetrahedrically oxygen coordinated positions in inorganic compounds.

Rare earth ions supply a variety of localized electronic states in the band gap of the inorganic compounds with different ligands. They can have coordination numbers from six to twelve in plurality of inorganic compounds. The outer shell of the ions is 4f, in which a number of electrons from one to fourteen can be stabilised. Electronic 4f levels are weekly affected by the crystalline field, the positions of energy levels are predominantly caused by the spin-orbit splitting and weakly depend on the host matrix. According to the Dieke diagram, trivalent and divalent rare earth ions have excited 4f states suitable to accumulate non-equilibrium carriers. Nonlimiting examples are Pr³⁺ ion having the 4f² electronic configuration or Yb³⁺ having the 4f¹³ electronic configuration. The shell becomes completely filled in Lu³⁺ ion and has 4f¹⁴ electronic configuration. The filled shell of Lu³⁺ ion is not suitable to create distinct electronic levels inside the band gap. The Lu ions are not suitable to create levels facilitating carrier accumulation, but they are convenient in crystals for doping with rare earth ions.

The inner 4d shell of rare earth ions can also create electronic levels suitable for accumulation of non-equilibrium carriers. The effect of the crystalline field on the 4d shell occupied by a different number of electrons is split due to the Stark effect. Nonlimiting examples are rare earth ions Ce³⁺, Pr³⁺, Tb³⁺, Eu²⁺ having the lowest excited 5d states in the band gap of the plurality of compounds.

A nonlimiting example of material for detecting crystal is lead tungstate (PbWO₄, PWO) single crystal. PWO is currently the material of choice for radiation detectors in large-scale high energy physics experiments. High-quality PWO single crystals referred to as PWO-II have been developed within the last decades for these applications. Radiation hardness of the PWO-II single crystals is a property of crucial importance for application of this crystal in the high-flux neutron detector suggested by this invention. The radiation hardness of PWO-II is improved by doping the crystal by yttrium and lanthanum at a small total content of 100 ppm. When La or Y ions are incorporated in the PWO crystal lattice, they aliovalently substitute lead ions and slightly distort the regular lattice-building tungsten anion complexes WO₄²⁻. This distortion leads to the formation of shallow traps capturing non-equilibrium carriers. The electron trapping centers due to doping by La and Y have thermal activation energy of ∼130 meV. At room temperature, most of the trapped electrons escape from the traps to the conduction band. Therefore, the electrons are captured by the trapping state for a short time, which does not exceed 1 ns at room temperature **[8]**. Deactivation of the traps is by a factor of ten faster than the radiative recombination at regular complexes WO₄²⁻ causing scintillation, thus, the doping to increase the radiation hardness of PWO does not have significant negative influence on the density of non-equilibrium carriers, which is of especial importance for neutron detection by the method suggested in this invention.

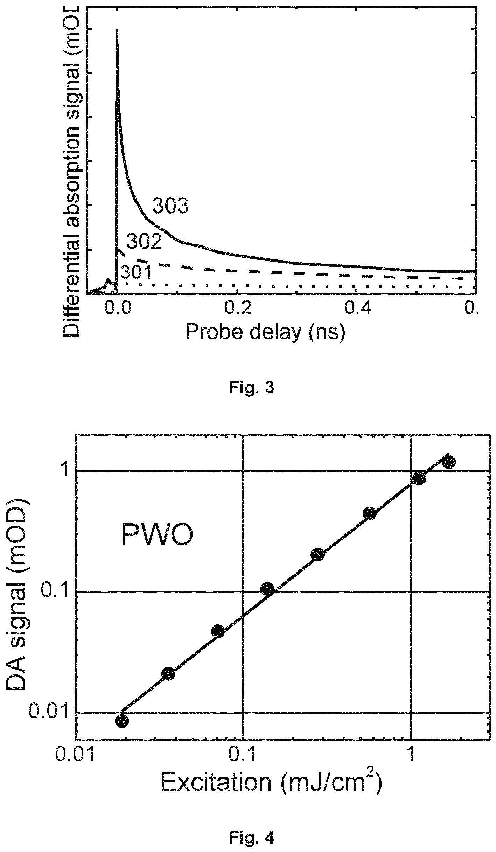

The kinetics of the response of the transient optical absorption to a short-pulse band-to-band excitation due to photoexcitation is presented in Fig. 3. The kinetics are taken at probe photon energy of 1.2 eV, where the response is found to be maximal. It is worth noting that this spectral region corresponds to the transparency region of PWO crystals. The response increases at increased excitation intensity. The dependence of differential absorption, i.e., the dependence of the difference in optical transmission with and without excitation as a function of excitation pulse energy density is illustrated in Fig. 4. The dependence is linear evidencing the direct proportionality of the differential absorption signal to the density of non-equilibrium carriers.

An advantage of a PWO crystal is a high stopping power to secondary particles created in the material under fast neutrons. When the neutrons having high kinetic energy enter the PWO crystal, they interact in inelastic way with nuclei of W and Pb forming the crystal. The neutron capture cross-sections of Pb and W are complementary. Natural isotope mixture of W has series of resonances in the neutron energy range 10 - 10⁴eV, whereas the resonances of Pb are in the range 3×10³-10⁶ eV. Moreover, the natural mixture of lead has an increasing neutron capture cross-section in the neutron energy range above 1 MeV. The interaction with heavy nuclei of W produces a variety of the secondary gamma-quanta in the energy range bellow 511 keV **[9]**. The interaction with heavy lead nuclei produces 0.85 and 2.6 MeV gamma-quanta **[10]**. Secondary gamma-quanta with the energy above 1.022 MeV produce electron-positron pairs annihilating by emission of gamma-quanta. All the mentioned gamma-quanta appear during thermalization cascades and are prompt.

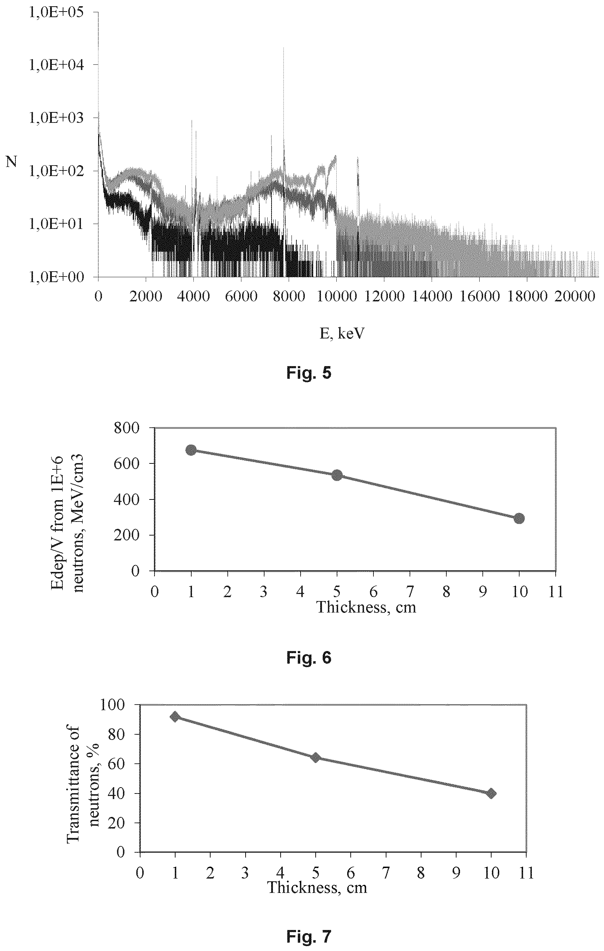

Now, the thickness of the detecting PWO crystal along the direction of neutron flux propagation is discussed. The dominant secondary particles after interaction of neutrons with PWO are gamma-quanta. Their distribution in energy calculated using the GEANT4 code for neutrons with energy of 10 MeV is presented in Fig. 5. The calculations show that the major part of the gamma-quanta has energies below 2 MeV.

PWO has a high stopping power to the soft gamma-quanta generated as the secondary particles after interaction of neutrons with the crystal. Fig. 6 depicts the density of the energy deposition from the secondary gamma-quanta in the crystals of different thicknesses, which is estimated using the GEANT4 simulation code. Since most of the gamma-quanta are emitted in the soft gamma region, the crystal thickness of less than 1 cm ensures the highest density of energy deposition. Increase in the thickness is favourable for absorption of gamma-quanta with higher energies, however, the gain in the absorption does not compensate the decrease of energy density due to increasing volume of the active region.

Figure 7 depicts the transmittance of 10 MeV neutrons in PWO crystal calculated by the GEANT4 simulation code. Only ∼10% of the 10 MeV neutrons interact with the crystal 1 cm in thickness.

As can be estimated from the simulation results presented in Figs. 5-7, the average density of the energy deposited per neutron with energy of 10 MeV in a 1 cm-thick PWO plate is approximately 70 eV/cm³. Consequently, each 10 MeV neutron produces in such a PWO plate in average 15 electron-hole pairs per cm³. Let us consider a short pulse of 10 MeV neutrons at a flux density of 10¹⁰ neutrons/cm² at the crystal location. The total number of neutrons incident on the front surface of a plate of 5x5=25 cm² in area equals 2.5·10¹¹. Each of the neutrons generates in average 15 electron-hole pairs per cm³. Thus, the density of e-h pairs is equal to 15·2.5·10¹¹ = 3.75·10¹² cm⁻³. Therefore, the density of e-h pairs generated by the neutron source considered is of the same order of magnitude as the threshold for the detection by using the method and apparatus disclosed, as it has been demonstrated under photoexcitation.

For neutron pulses with duration exceeding the lifetime of electron-hole pairs, the density of non-equilibrium carriers depends on the ratio of the pulse duration *t*ₚ creating an electron-hole pair and the recombination time *t*ᵣ. At *t*ₚ >> *t*ᵣ (in quasi-steady-state or CW conditions), the electron-hole pair density depends on the neutron flux density and time *t*ᵣ. Typical spallation sources, generate 10¹⁴ neutrons per one pulse of a duration of 1 µs. Thus, the neutron generation rate is 10¹⁴/10⁻⁶ = 10²⁰ s⁻¹. The non-equilibrium e-h pair density in the detector can be estimated in typical conditions. The neutrons are emitted within the solid angle of approximately π. The solid angle corresponding to the front face of the detector, 5x5=25 cm² in area, placed at a distance of 10 cm from the source is by a factor of ∼13 smaller. As estimated above, neutrons will interact within a 1 cm-thick sample by generating 15 electron-hole pairs per 1 cm³ per neutron. Consequently, 10²⁰/13·15 = 1.2·10²⁰ e-h pairs per 1 cm³ per second are generated. Since the lifetime of e-h pairs *t*ᵣ = 10 ns, the density of e-h pairs can be calculated as 1.2·10²¹·10⁻⁸ = 1.2·10¹² cm⁻³. Therefore, the density of e-h pairs generated by the neutron source considered is above the detection threshold for the detection by using the method and apparatus disclosed.

It is appreciated that the family of tungsten compounds with the composition AWO₄ (A = Cd, Mg, Zn) having monoclinic symmetry might also be of use as a detecting medium for neutron detection in the embodiment suggested in the current invention. The said is also related to molybdate compounds, in which molybdenum ions in the crystal matrix may be partly substituted by tungsten.

Another nonlimiting example of materials to be exploited in the neutron detector is garnet type single crystals doped with rare earth ions. These crystals are well developed for applications as scintillators. In the method and apparatus disclosed, the activator ions, usually cerium ions, serve for collection of non-equilibrium carriers, whereas the density of the non-equilibrium carriers localized at cerium ions is probed by the probing beam.

Among the activated garnets, Ce-doped gallium gadolinium garnets (Gd₃Al₂Ga₃O₁₂, GAGG) is a favourable though nonlimiting candidate as detecting crystal in neutron detectors due to a high neutron stopping power in this material. The high stopping power of a GAGG single crystal is ensured by gadolinium, which is a lattice building element in this compound. The natural gadolinium contains a large fraction of isotopes with a high neutron cross section, thus GAGG is well suited for neutron detection without enrichment of the raw material by certain Gd isotopes to produce the crystal.

At the high neutron energy, the role of the Gd atoms to absorb neutrons is diminished, whereas the role of the lighter nuclei is increased. Among lighter nuclei, Ga possesses a relatively high neutron cross-section, as seen from Table 1. It is appreciated that the presence of Ga ions in a Gd-containing compound increases the efficiency of interaction of the high-energy neutrons with the crystal.

**Table 1. Integral neutron cross sections for nuclei of some isotopes forming inorganic compounds.**

| **Isotope** | **Neutron energy, MeV** | **Integral cross section, barn** |
|---|---|---|
| Ga-69 | 1-20 | 65 |
| | 1-200 | 437 |
| Ga-71 | 1-20 | 64,6 |
| | 1-200 | 437 |
| Al-27 | 1-20 | 37.7 |
| | 1-150 | 198 |
| O-16 | 1-20 | 30 |
| | 1-150 | 144 |
| Gd-152 | 1-20 | 100 |
| Gd-154 | 1-20 | 100 |
| Gd-155 | 1-20 | 100 |
| Gd-156 | 1-20 | 101 |
| Gd-157 | 1-20 | 101 |
| Gd-158 | 1-20 | 101 |
| Gd-159 | 1-20 | 99,9 |
| Gd-160 | 1-20 | 101 |

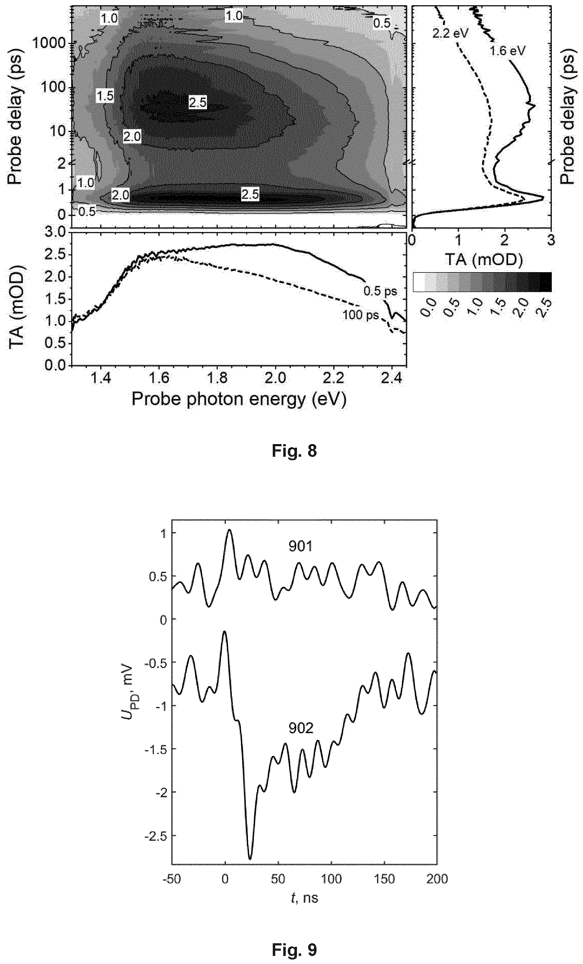

The probing photon energy and the probing mode have to be selected to extract the maximal transient absorption caused by the non-equilibrium carriers. The transient absorption (TA) due to non-equilibrium carriers as a function of probe photon energy and a delay between pump and probe pulses is presented for a typical GAGG:Ce crystal in Fig. 8. The cross sections of the data carpet showing TA kinetics at two typical probe photon energies of 1.6 and 2.2 eV are presented in the side panel of Fig. 8. The TA response decays into a nanosecond domain. Therefore, probing by short pulses does not enhance the response, and continuous wave light source is preferable, especially in view of ensuring high stability of the probing light beam. The TA spectra at two delays between pump and probe pulses are presented in the lower panel of Fig. 8 and illustrate the spectral range, which is optimal for probing the TA response in GAGG:Ce.

A nonlimiting example of application of the apparatus disclosed is illustrated in Fig. 9, where the pulse of a response to excitation is demonstrated. The response presented in Fig. 9 is obtained using GAGG:Ce single crystal as the detecting crystal (104 in Fig. 1) exploited in the simplest configuration outlined in Fig. 2a. The opposite surfaces of the crystal were parallel and coated by gold to ensure a high reflection coefficient from the surface. The detection unit was configured to ensure 21 zigzag pass of the probing light beam within the crystal.

The irradiation by neutrons has been substituted by X-ray excitation resulting in the density of non-equilibrium carriers expected in high neutron flux facilities. Neutrons produce secondary gamma-quanta predominantly by interacting with gadolinium nuclei. Natural gadolinium is a mixture of 6 isotopes. Two of them, 155-Gd and 157-Gd, have the cross-sections for interaction with thermal neutrons of 61 and 255 kb, respectively, which are the highest among all known isotopes. The total energy release is 8.5358 and 7.937 MeV, respectively. Secondary particles include products of the neutron capture reactions which are a few γ-quanta and conversion electrons. The lowest excited states at the nuclei relaxation are the discrete levels corresponding to the nuclei rotational states, and most of the lowest transitions have the energy in the range between a few tens of keV to hundreds of keV. Similar excitations might also occur at excitation of this material by X-rays. A pulsed X-ray source with a maximum photon energy of 370 keV and 110 mR exposure dose per pulse of 10 ns in duration at the position of the detecting crystal placed at a distance of 4 cm from the source was used.

The typical background from the photodetector with the probing light beam off is illustrated by curve 901 in Fig. 9. Curve 902 depicts the response of the probing light to the excitation pulse, which is read out from the detector.

The detector disclosed has no physical limits for exploitation at higher neutron fluxes, except of optical damage of the crystal surface. Therefore, a diamond-based detector might be applied to monitor high-power neutron sources.

Technologically feasible size of diamond crystal to be exploited in the detector disclosed is 0.5×0.5×0.05 cm³. Such small crystals of a light material are not efficient to detect secondary gamma quanta. However, neutrons with energy above a threshold of 10 MeV create α particles in diamond or any other carbon-containing compound due to the nuclear reaction ¹²C(n,α)⁹Be, which leads to the creation of α-particles with an energy of 8.9 MeV. A typical path length of α- particles with kinetic energy bellow 10 MeV does not exceed 50 µm in carbon, thus, they are completely absorbed in the diamond crystal. The number of electron-hole pairs created per one neutron absorbed in diamond with the band gap of 4.7 eV is *E*ₐₗₚₕₐ/2*E*_{g} = 8.9·10⁶ eV/9.4 eV ≈ 10⁶ pairs.

In one embodiment, a diamond crystal is exploited as the detector unit to monitor 14 MeV neutrons of the neutron pulse generator emitting 10¹⁰ neutrons per pulse. The crystal is mounted at a distance of 1 cm from the generation area so that the neutrons propagate along the 0.5 cm-long side. The neutrons are emitted within the solid angle of 2π, the solid angle corresponding to the front face of the detector, 0.05·0.5 = 0.025 cm² in area, placed at a distance of 1 cm from the source is by a factor of ∼250 smaller. The absorption cross-section·σₐ due to reaction ¹²C(n,α)⁹Be equals 80 mb. Thus, the fraction of neutrons absorbed in the crystal of the length *d* = 0.5 cm can be estimated knowing the amount of atoms per cm³ in the material *N*ₐₜₒₘₛ, which can be determined through the density ρ, the Avogadro constant·*N*ₐ and molar mass *M*, as 1 - *III*ₒ = 1 - exp(-*N*ₐₜₒₘₛ·σₐ·*d*) = 1 - exp[(-ρ·*N*ₐ/*M*)·0.08·10⁻²⁴·0.5] = 1 - exp[(-3.7·6·10²³/12)·0.08·10⁻²⁴·0.5] = 0.007. Thus, the density of e-h pairs generated in the crystal by 10¹⁰ neutrons per pulse is 10¹⁰·(1/250)·0.007·10⁶/0.0125 = 2.2·10¹³ cm⁻³. Therefore, the density of e-h pairs generated by the neutron source considered is above the threshold for the detection by using the method and apparatus disclosed.

**Method for measuring pulsed neutron flux** is based on the detection of current or voltage pulse from photodetector occurring due to transient optical absorption imposed by non-equilibrium carriers generated by secondary particles emitted in the detecting crystal as a result of interaction of the neutrons to be detected and the crystal used for detection. A light source is optically coupled with the detecting crystal via a lightguide and delivers a light beam to the crystal. The beam passes the crystal in a single transition or in multiple transitions and is collected to the output light guide delivering the beam to a photodetector. The constant voltage or current delivered by the photodetector to readout electronics is considered as a zero signal. The detecting crystal is placed at the location where the neutron flux has to be measured. Neutrons to be detected interact with the detecting crystal and a part of their energy is converted into secondary particles. The particles interact with the detecting crystal and generate non-equilibrium electron hole pairs. The electrons and holes relax to the bottoms of conduction and valence bands, respectively, and absorb a part of the light passing the detecting crystal. The crystal properties and the light wavelength are optimized to maximize the amplitude of the decrease in the optical transmittance of the detecting crystal due to absorption by the non-equilibrium carriers. A pulse of the decreased intensity of light passing the detecting crystal, referred to as transient absorption, is detected by the photodetector as a pulse in voltage or current. The electrical pulse is further processed by readout electronics and digitized using the processor unit of the detecting system. The time-integrated intensity of the electric pulse is proportional to the number of neutrons entering the front surface of the detecting crystal. The intensity is the measurable quantity in this method and reflects the number of neutrons in the neutron pulse. The method allows for various calibrations in units, which are optimal for a specific application of this invention. The separation of the detecting crystal from the light source and the photodetector with subsequent electronics by using light guides enables placing all electronic parts of the system far enough from the radiation source to avoid any radiation damage.

**The novelty of the invention** is in the capability of the neutron detector to monitor neutron fluxes, which are substantially larger than those feasible to be monitored by the neutron detectors in the prior art. The capability is based on a novel method of detecting neutrons by measuring the transient change in optical absorption of a detecting crystal subjected to neutron irradiation. The change in optical absorption is caused by the absorption by non-equilibrium carriers generated by secondary particles imposed to the crystal by interaction with neutrons to be detected. The novel detection method enables splitting in space the detection unit consisting of radiation tolerant optical components and the unit of signal conversion and processing containing electronic components, which are sensitive to deterioration imposed by irradiation. The latter property is limiting for application of the neutron detectors in the prior art for monitoring large neutron fluxes. The demand for monitoring large neutron fluxes is evident but not limited by applications in large experimental facilities, where neutrons are produced by the spallation reaction and in the infrastructures of nuclear fission reactors.

While the invention has been described with reference to exemplary embodiments, it will be understood that various changes may be made, and equivalents may be substituted for elements thereof without departing from the scope of the invention. In addition, many modifications will be appreciated to adapt a particular instrument, situation or material to the teachings of the invention without departing from the essential scope thereof. Therefore, it is intended that the invention is not limited to the particular embodiment disclosed as the best mode contemplated for carrying out this invention, but that the invention will include all embodiments falling within the scope of the appended claims.

### LIST OF NON-PATENT CITATIONS

1 D.L.Chichester, Production and Application of Neutrons Using Particle Accelerators, INL/EXT-09-17312, Prepared for the U.S. Department of Energy, National Nuclear Security Administration Under DOE Idaho Operations Office Contract DE-AC07-05ID14517
2 J.J.W. Watterson, A review of accelerator-based neutron sources and their applications, University of Witwatersrand, Wits, South Africa, XA0054945
3 D. De Luca, L. Campajola, P. Casolaro, Neutron production with particle accelerators, IOP Conf. Series: Journal of Physics: Conf. Series 1226 (2019) 012021.
4 K. H. Andersen et al., The instrument suite of the European Spallation Source, NIM A, 957 (2020) 163402
5 P. Lecoq, A. Gektin, M. Korzhik, Inorganic Scintillators for Detecting Systems, Springer, 2017.
6 G. Tamulaitis, E. Auffray, A. Gola, M. Korzhik, A. Mazzi, V. Mechinski, S. Nargelas, Y. Talochka, A. Vaitkevičius, A. Vasil'ev, Improvement of the timing properties of Ce-doped oxyorthosilicate LYSO scintillating crystals, J. Phys. Chem. Solids, 139 (2020) 109356.
7 P. Li, S. Gridin, K. B. Ucer, R. T. Williams, and P. R. Menge, Picosecond absorption spectroscopy of self-trapped excitons and Ce excited states in CeBr3 and La1-xCexBr3, Phys. Rev. B 99, 8 March 2019.
8 E. Auffray, R. Augulis, A. Borisevich, V. Gulbinas, A. Fedorov, M. Korjik, M. T. Lucchini, V. Mechinsky, S. Nargelas, E. Songaila, G. Tamulaitis, A. Vaitkevičius, S. Zazubovich, Luminescence rise time in self-activated PbWO4 and Ce-doped Gd3Al2Ga3O12 scintillation crystals, Journal of Luminecence. Vol. 178 (2016), p.54.
9 A. M. Hurst et. al., Gamma Spectrum from Neutron Capture on Tungsten Isotopes, Journal of the Korean Physical Society, 59 (2011), p.1491
10 M. A. Rothman and C. E. Mandeville, Gamma Rays Excited. by the Inelastic Scattering of Neutrons in Lead, Bismuth, Iron, Nickel, and Chromium, Phys. Rev, 93 (1954) 796.

## Claims

1. **A method** for detecting a pulsed neutron flux by using a crystal converting the neutron energy to non-equilibrium carriers, comprising at least steps of:
• imposing a neutron pulse (110) on the detecting crystal (104),
• illuminating the crystal (104) being imposed by the neutron pulse (104) with a beam of light (101),
• reading the Response of light passed the crystal (104) being imposed by the neutron flux (110) under the influence of non-equilibrium carriers generated in the crystal with the density in proportion to the neutron flux,
• processing the obtained Response measurement data (109),
**characterized in that**
• the crystal (104) having a property of interaction of neutrons with the crystal material resulting in the creation of secondary particles and the subsequent generation of non-equilibrium carriers by the particles,
• the source of light (101) is of a spectral range of 300 -1500 nm,
• the Response processing (109) is estimating the neutron flux (110) properties from the measured Response data, comprising further steps of:
∘ Step 1: conversion of the Response due to the non-equilibrium carriers with the density generated in the crystal in proportion to the neutron flux to a pulse of current or voltage by a photodetector;
∘ Step 2: amplification and digitalization of the pulse of current or voltage;
∘ Step 3: calculation of the time-integrated intensity of the pulse of current or voltage, which is the quantity having a value in proportion to the number of neutrons entering the front surface of the detecting crystal, the proportion being constant for a specific neutron source;
∘ Step 4: calculation of quantity characterizing the neutron source (neutron flux, number per pulse, etc.) in accordance with the needs of a specific measurement and by using calibration accomplished by exploiting any conventional method.

2. The **method** according to Claim 1 **characterized in that** the measured Response is Transient Optical Absorption due to non-equilibrium carriers in the crystal (104) imposed by the neutron flux (110).

3. The **method** according to Claim 1 and 2 **characterized in that** the measured Response is the interference pattern due to the change of the refractive index obtained by using an interferometric configuration containing crystal (104).

4. An **apparatus** for detecting neutron flux **by the method** according to Claims 1 to 3, comprising:
- a crystal (104) converting the energy of the neutron flux (110) to non-equilibrium carriers,
- a light source (101) configured to probe the optical absorption of the crystal (104),
- a photodetector (108) and data readout unit (109) configured to detect the change imposed by the neutron flux (110) acting upon the crystal (104) to the optical signal delivered from the light source (101) through the crystal (104) to the photodetector (108),
- a processor configured to estimate the neutron flux (110) property using the measured signal (109),
**c haracteri zed** in that
• said crystal is at least an inorganic crystal, at least, with a chemical formula ABO₄ (A = Mg, Zn, Cd, Ca, Sr, Ba, Pb; B = W, Mo), or/and a gadolinium-containing crystal, or/and diamond,
• the source of light in a spectral range of 300 -1500 nm,
• a light guiding system is arranged to deliver the light from the light source (103) to the crystal (104) and after passing through the crystal (104) to a photodetector (108) located at distances sufficiently long to avoid any significant influence of neutrons or neutron-induced secondary particles on the electronic part of the apparatus.

5. The **apparatus** according to claim 4, wherein the crystal (104) is a gadolinium-containing crystal doped with cerium or ions of other rare earth elements (Pr, Nd, Pm, Sm, Tb, Dy, Ho, Tu, Tm) or the elements of iron group (Ti, V, Cr, Mn, Fe, Co, Ni, Cu, Zn).

6. The **apparatus** according to claim 5, w h e r e i n the crystal (104) is a crystal in which gadolinium is substituted, completely or partly, by any ion or their combination from the set of ions Lu, Eu, Er, Yb.

7. The **apparatus** according to claim 5, wherein the crystal (104) is a gadolinium- and gallium-containing crystal, doped with cerium or ions of other rare earth elements, or elements of the iron group.

8. The **apparatus** according to claim 4, wherein the light source (101) is a continuous wave light source or pulsed light source.

9. The apparatus according to claim 4, wherein the light source (101) is a laser diode or solid-state laser.

10. The **apparatus** according to claim 4, wherein the crystal (104, 201, 207) is equipped with coatings (202, 209) and accessories ensuring multiple transitions of the light beam (205, 211) entering the crystal before collecting the beam (206, 212) into the readout waveguide.

11. The **apparatus** according to claim 4, wherein the crystal (104) is a part of an interferometric arrangement wherein the input light beam (217) is split into two beams by an optical beam splitter, a holographic beam splitter or other appropriate device (215), wherein one of the beams passes the detecting crystal (214) subjected to the neutron flux to be monitored, whereas the second beam passes the second crystal (213) nominally identical to the first one except that it is shielded from any radiation, wherein an optical system (216) is used to couple the two beams to obtain the interference of the two beams resulting in the formation of an interference pattern (218).
